# EUROPEAN PATENT APPLICATION

(11) **EP 2 654 382 A1**
(43) Date of publication of application: **23.10.2013**
(21) Application number: 13156906.3
(22) Date of filing: 27.02.2013
(51) Int. Cl.: H05B 37/02, H04L 12/26

(54) **Device for controlling an electric power supply**

(30) Priority: 16.04.2012 IT MI20120618
(71) Applicant: Albia SA, 6900 Lugano (CH)
(72) Inventor: Soresini, Massimiliano, 27010 Santa Cristina E Bissone PV (IT)
(74) Representative: Modiano, Micaela Nadia

(57) **Abstract**

A device for controlling the electric power supply (1) of at least one electrical user device, comprising a board (2) which in turn comprises a server unit (3) adapted to be connected (10) to a central unit (5) and at least one switch means (4) which is connected to a power supply (7) of the at least one electrical user device, the server unit (3) being adapted to control the at least one switch means (4).

## Description

The present invention relates to a device for controlling an electric power supply.

Currently in every building there is the possibility of connecting to the electric power supply network a plurality of electrical user devices for the most disparate uses, both in buildings used for dwelling and in offices, laboratories, industries and others.

The use of the electric power supply network by the most disparate electrical user devices, however, often causes considerable energy expenditures, since it is often prohibitive for the user to control the switching on and off of each one of the user devices, for example when their operation is not required. The average user in fact often forgets that some electrical user devices are on, such as for example electrical devices for heating or cooling a room, or lighting devices or also electrical appliances.

Forgetting an electrical user device which is switched on also entails the considerable disadvantage of reducing the average life of the electrical appliance itself in addition to increasing its consumption. Many electrical user devices in fact do not provide the possibility of automatic or programmable power-off; consider, for example, the field of ordinary building lighting.

The aim of the present invention is to provide a device for controlling an electric power supply that obviates the drawbacks cited above regarding the power supply of electrical user devices, allowing a considerable reduction in the energy costs of current buildings.

Within this aim, an object of the present invention is to provide a device for controlling an electric power supply that allows extending the average life of electrical appliances.

Another object of the invention is to provide a device for controlling an electric power supply that can be implemented easily in existing buildings in a non-invasive manner.

A further object of the invention is to provide a device for controlling an electric power supply that is capable of ensuring an efficient continuity of service for power supply, controlling in a synchronized manner the power-off and power-on of the most disparate electrical user devices that are present in a building.

Another object of the invention is to provide a device for controlling an electric power supply that allows the remote management of the power-on and power-off of the electrical user devices connected thereto.

A further object of the invention is to provide a device for controlling an electric power supply that allows the automatic management of the power-on and power-off of electrical user devices.

Another object of the invention is to provide a device for controlling an electric power supply that is capable of giving the greatest assurances of reliability and safety of use.

A further object of the invention is to provide a device for controlling an electric power supply that is easy to provide and economically competitive in comparison to the background art.

This aim, these objects and others that will become more apparent hereinafter are achieved by a device for controlling the electric power supply of at least one electrical user device, **characterized in that** it comprises a board which comprises a server unit adapted to be connected to a central unit and at least one switch means which is connected to a power supply of said at least one electrical user device, said server unit being adapted to control said at least one switch means.

Further characteristics and advantages of the present invention will become more apparent from the description of four preferred but not exclusive embodiments of a device for controlling an electric power supply, illustrated by way of non-limiting example with the aid of the accompanying drawings, wherein:
Figure 1 is a schematic view of a first embodiment of a device for controlling an electric power supply, according to the invention;
Figure 2 is a schematic view of a second embodiment of a device for controlling an electric power supply, according to the invention;
Figure 3 is a schematic view of a third embodiment of a device for controlling an electric power supply, according to the invention;
Figure 4 is a schematic view of a fourth embodiment of a device for controlling an electric power supply, according to the invention;
Figure 5 is a view of an example of application of the device for controlling an electric power supply, according to the invention, in an office;
Figure 6 is a view of an example of application of the device for controlling an electric power supply, according to the invention, in a workshop;
Figure 7 is a view of an example of application of the device for controlling an electric power supply, according to the invention, in a museum hall.

With reference to the cited figures, the device for controlling an electric power supply of at least one electrical user device is generally designated by the reference numeral 1.

According to the invention, the device for controlling an electric power supply 1 of at least one electrical user device comprises a board 2 that comprises a server unit 3 adapted to be connected 10 to a central unit 5 and at least one switch means 4 which is connected to a power supply 7 of said at least one electrical user device, said server unit 3 being adapted to control said at least one switch means 4.

The device for controlling an electric power supply 1 directly influences the individual user devices but downstream of the electrical system of the building in which it is adopted.

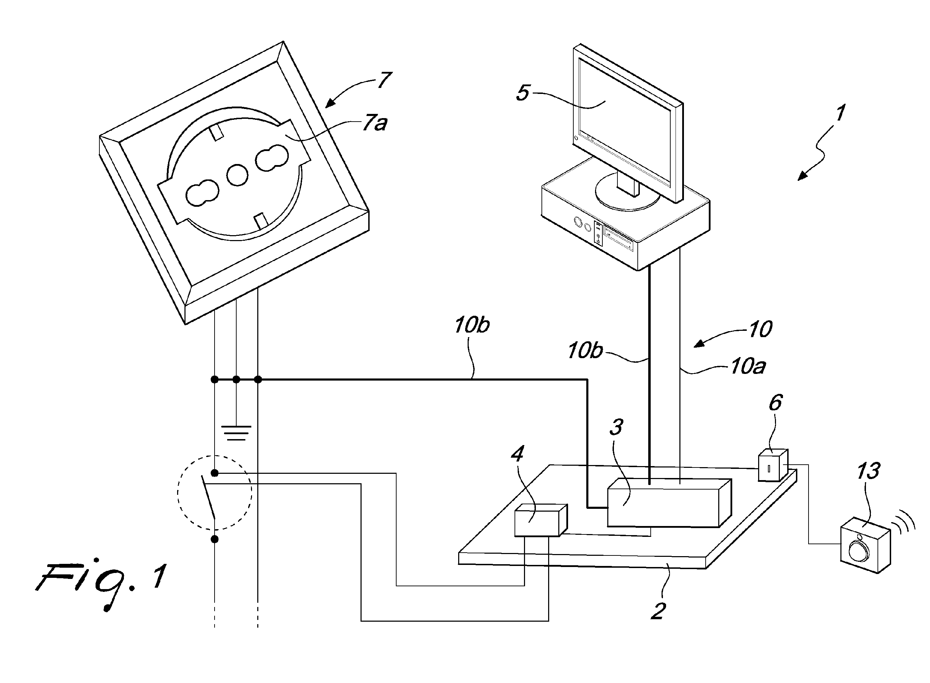

Figure 1 is a view of a first embodiment of the invention, according to which the power supply 7 to which it is possible to connect any electrical user device is constituted by an electric power outlet 7a. Said electric power outlet 7a is a wall outlet. Said outlet 7a can be one of any one of the known types adopted in the various countries, such as for example an outlet for a plug of types A, C, F, E, hybrid E/F, G, H, I, J, K, M, Magic and L, both with a 10-amp rating and with a 16-amp rating. The outlet shown in Figure 1 illustrates schematically the typical phase, neutral and ground connections.

The board 2, which for example can belong to the external body of the outlet 7a, comprises a server unit 3, which is constituted advantageously by an electronic unit that supports a web server capable of controlling the switch means 4, such as for example a relay, in order to open or close the power supply circuit of the outlet 7a, in practice allowing or blocking the flow of electric current to the user device connected to the outlet 7a.

The web server, which has the purpose of controlling the switch means 4, can be managed by a central unit 5 by means of its IP address (from the acronym "Internet Protocol"), and therefore also from a remote post. Said central unit 5 can send signals to the web server by means of an Ethernet network 10a, therefore through a connector of the known RJ-45 type, or by means of what is called powerline technology, which uses the electric power supply network itself as a transmission medium 10b. As is known, powerline technology is provided by superimposing on the transport of electric current, which is direct or alternating at low frequency, through the electric power supply network itself, a signal with a higher frequency that is conveniently modulated by the information to be transmitted.

The board 2 can comprise advantageously at least one digital/analog input 6 connected to the server unit 3. Signals related to different types of sensors, for example adapted to transmit signals regarding the presence/absence of people in a given room (presence detector 13), regarding the opening/closing of doors or windows (alarm system 14), and regarding the temperature of the room (temperature sensor 12), can reach said digital/analog input 6.

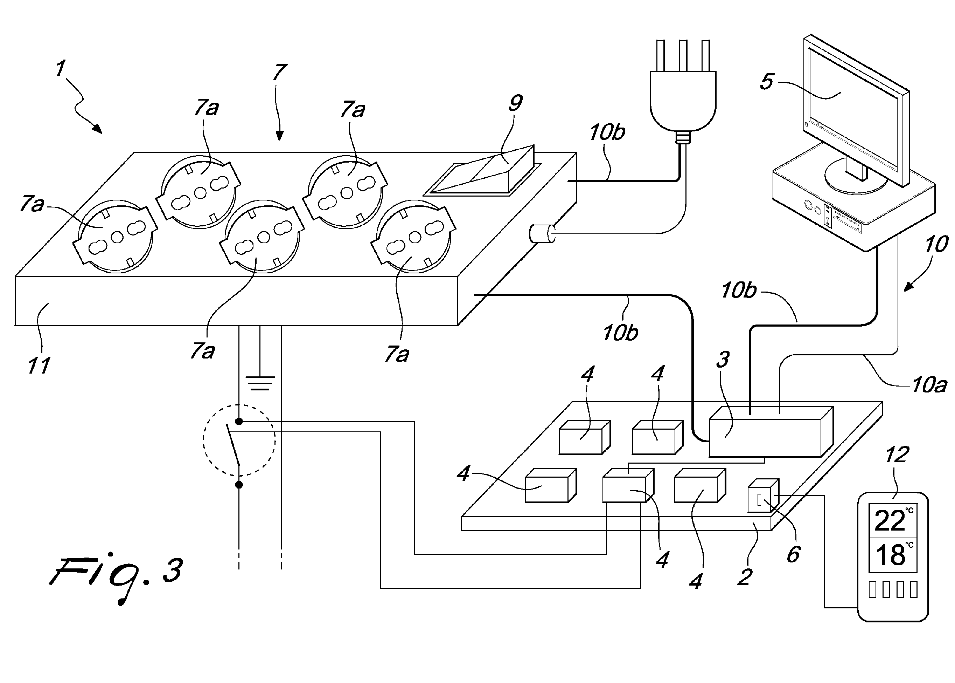

The server unit 3 manages the information that arrives from the digital/analog input 6 in order to control the switch means 4 or, in the case of a plurality of outlets 7a, the various switch means or relays 4 associated with each one of said outlets 7a, as shown in Figure 3.

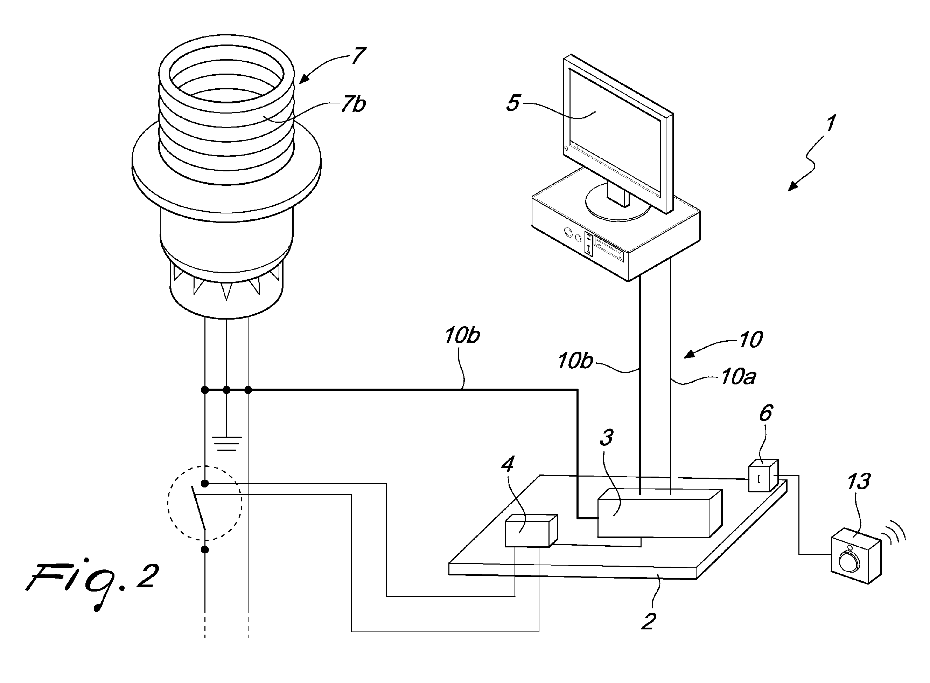

Figure 2 is a view of a second embodiment of the invention, according to which the power supply 7 is constituted by a lamp holder 7b and accordingly the electrical user device connected thereto is a lamp. The lamp holder 7b allows both the mechanical fixing and the electrical fixing of the light bulb, the power supply of which therefore can be controlled by the server unit 3, optionally on the basis of the information received from the digital/analog input 6, for example regarding the passage or presence of users.

Figure 3 is a view of a third embodiment related to a multiple-outlet system 11, which comprises a plurality of electrical outlets 7a, advantageously from five to eight. According to this embodiment, the device for controlling an electric power supply 1 manages the power supply of a plurality of electrical user devices that can be connected to each one of the electrical power outlets 7a. The multiple-outlet system 11 comprises also a general switch 9, which actuates simultaneously all the user devices connected to the electrical outlets 7a.

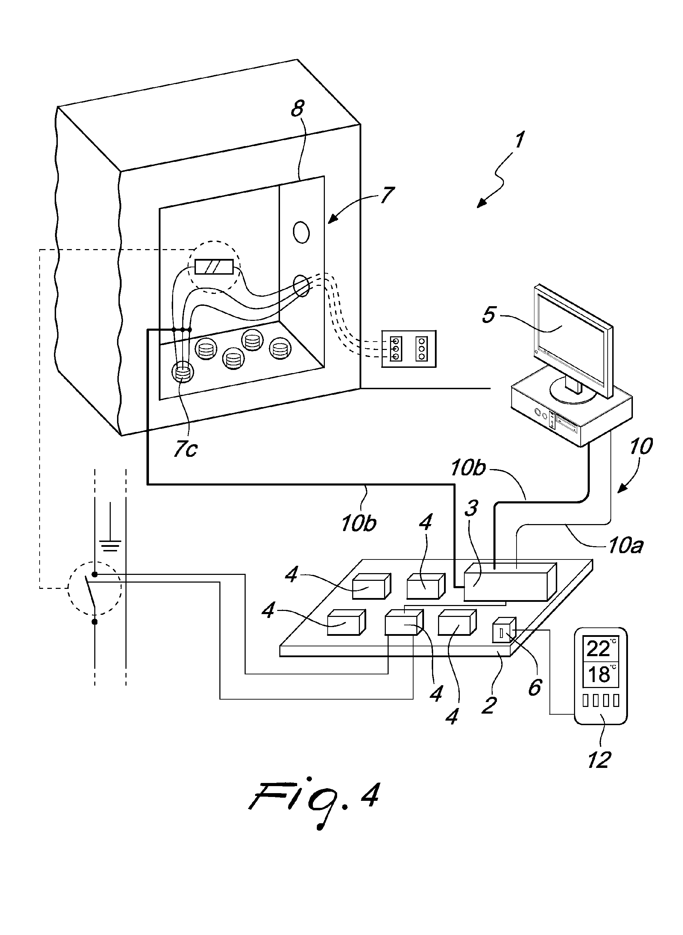

According to the fourth embodiment, shown in Figure 4, the power supply 7 is an electrical connection 7c of a junction box 8. In particular, the electrical connections 7c that originate for example from a residual-current switch and are then brought to the various user devices arranged in the room, such as for example wall outlets, lamps, climate control systems, arrive inside the receptacle in which insertion of the junction box 8 is provided.

The operation of the device for controlling an electric power supply is described hereinafter with particular reference to the third embodiment of the invention, illustrated in Figure 3 and related to a multiple-outlet system 11.

The device for controlling an electric power supply 1 can manage a plurality of electrical user devices connected thereto. The power-on or power-off of the switch of the individual relays 4 can in fact be controlled by means of a programmable logic, since the board 2 on which the relays 4 are positioned is provided with a server unit 3, in which a web server operates which is adapted for the operation of the control device 1 itself and to give responses to the inputs supplied by the user. The operating modes of the device 1 can in fact be set by the user, according to his own requirements, with the possibility of intervening on the individual user devices connected to the device 1, accessing the web server by means of network peripherals, from a central unit 5, such as for example a personal computer.

The device for controlling an electric power supply 1 can operate according to four modes:
1. Standard: the power-on or -off of the relays 4 occurs by human intervention, for example for managing directly the lights or a heating system in a given room. Even in a possible situation of malfunction of the device 1, the relays 4 remain in the closed position, ensuring the flow of current.
2. Programmable: the user can configure each electrical user device by means of the server unit 3, specifying which type of electrical user device is connected to each outlet 7a and which function is to be the corresponding one. In this manner, the operation of each electrical user device can be programmed daily or weekly on the basis of the requirements of the user, who for example can provide instructions regarding the power-on or power-off times of lights or of the heating of a room.
3. Automatic: in addition to the initial programming of the operation of the device 1 by the user, by means of the input of initial data related to the power-on and -off of the individual user devices, sensors 12, 13, 14 are used which can be connected to the digital and/or analog inputs 6 of the board 2, such as for example temperature sensors 12, humidity sensors, sensors 13 for the presence of people, or sensors for the opening and closing of doors or windows 14, or also brightness sensors. In this manner, the user can set the temperature that he wishes to maintain in the room and the electric power supply control device 1 will manage the temperature of the room on the basis of the detected data, switching on or off the heating system appropriately.
4. Remote management: the configuration by the individual users can be performed directly on the multi-outlet system 11 by means of a personal computer that is connected to the electric power supply control device 1 by local management or by centralized management, making it possible to reach simultaneously and remotely multiple electrical user devices of a room or a building, having a global view of the situation and thus having full control of all the rooms of a building or of the areas of an entire factory. The user can also intervene to optimize the operation of the control device 1 or to modify the initial settings in view of changed requirements.

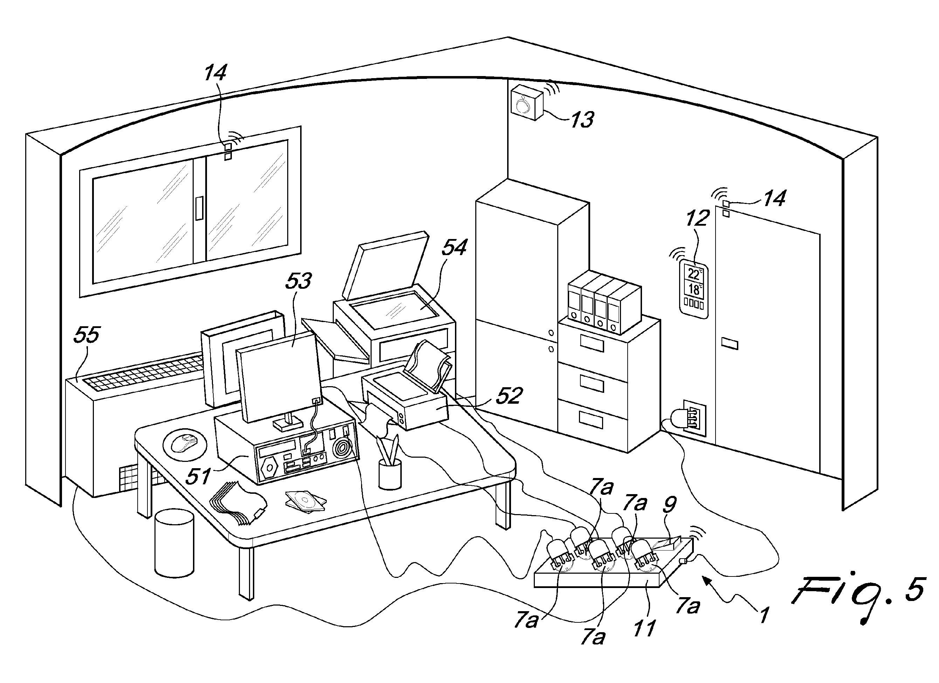

In an example of application of the electric power supply control device 1 such as the one shown in Figure 3 with reference to the third embodiment, the device 1 can be used in an office, as shown in Figure 5, by connection of devices such as a computer 51, a printer 52, a monitor 53, a photocopier 54, a climate control unit 55 and any other electrical user device that requires a 220 V power supply to the various outlets 7a.

The first step to be made is to configure the individual user devices by means of the web server, specifying which device is connected to each one of the outlets 7a and with which function. In this manner, the user can schedule daily the various user devices, considering the fact that it is a workday or a holiday. If the automatic mode is adopted, the web server manages the user devices together with the sensors adapted to transmit the inputs related to the presence/absence of people in the office (presence detector 13), to opening/closing of windows or doors (alarm system 14), and to the temperature to be maintained in the office (temperature sensor 12).

For example, by associating with the various outlets 7a of the multi-outlet system 11 respectively a computer 51, a monitor 53, a printer 52, a photocopier 54, a climate control unit 55, and by setting the opening and closing times of the office and the temperature to be maintained in the office during working hours, and by connecting the door and window opening/closing alarm sensors 14, in the automatic mode the control device is capable, on a typical day, to manage the office as follows:
7:00 AM - starting of the climate control system 55
8:30 AM (office opening time) - activation of all the electrical user devices and deactivation of the alarm sensors 14; if the temperature of the office exceeds the desired temperature, the device 1 deactivates the climate control system 55;
12:30 AM (lunch break start) - reactivation of the alarm sensors 14, deactivation of the monitor 53, the printer 52 and the photocopier 54;
2:00 PM (end of lunch break) - deactivation of the alarm sensors 14, reactivation of the monitor 53, of the printer 52 and of the photocopier 54;
5:15 PM (human intervention to open the window) - report of the alarm sensors 14, deactivation of the climate control system 55;
5:30 PM (human intervention to close the window) - report of the alarm sensors 14, reactivation of the climate control system 55;
6:00 PM (office closing time) - power-off of all user devices, reactivation of the alarm sensors 14.

In the case of a non-working day, the setting provides for the alarm system 14 to be active all day and the temperature in the room is set lower since no staff is present in the office.

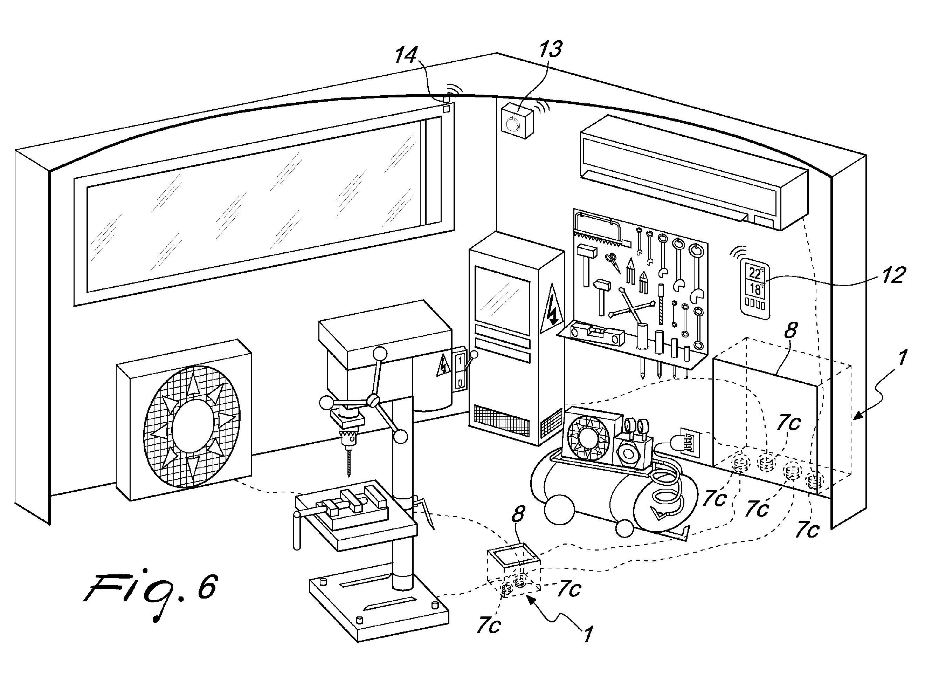

The device for controlling an electric power supply 1, adopted for example in laboratories or workshops, or in equipped departments, according to any one of the four described embodiments, is programmed in a manner similar to what has been described in the case of an office, taking into account the various electrical user devices connected to the electric power supply and any different work times. Figure 6 is a view of an example of application of the device for controlling an electric power supply, according to the third embodiment, in a workshop.

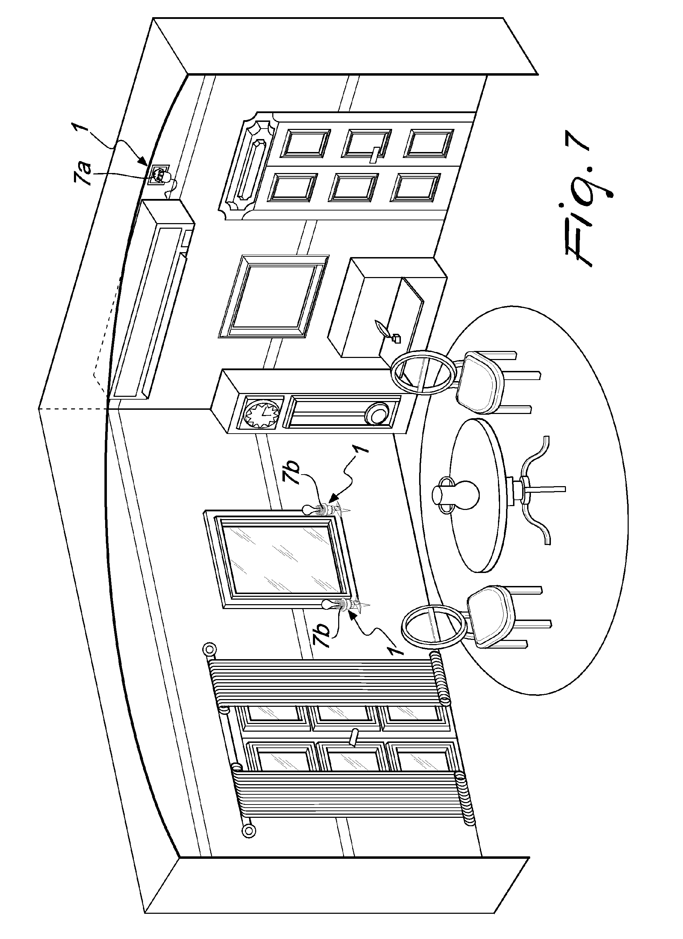

The control device 1, according to the second embodiment, i.e., regarding one or more lamp holders 7b, can be used advantageously to light paintings in museum halls, as shown for example in Figure 7, so as to ensure the power-on and -off of the light sources at the closing times of said museum.

The device for controlling an electric power supply 1 advantageously provides for automatic power-on after a blackout.

Moreover, when the control device 1 is disabled all the electrical user devices operate normally.

In practice it has been found that the device for controlling an electric power supply, according to the present invention, achieves the intended aim and objects, since it allows a reduction in energy costs and extension of the average lifespan of electrical appliances due to their more rational and efficient use.

Another advantage of the device for controlling an electric power supply, according to the invention, by influencing directly the electrical user devices but downstream of the electrical system, resides in the fact that it can be used in buildings that are difficult to alter, for example because they are old, where any invasive interventions on the structure would be subject to hindrances on the part of responsible arts commissions, or in buildings used as work offices, where any masonry work would entail inconvenient interruptions of work.

A further advantage of the device for controlling an electric power supply according to the invention resides in the fact that it manages automatically, or in a manner that can be controlled remotely, simultaneously all the electrical user devices of a building, optimizing their operation on the basis of the habits or activities of users.

The device for controlling an electric power supply thus conceived is susceptible of numerous modifications and variations, all of which are within the scope of the appended claims.

All the details may further be replaced with other technically equivalent elements.

In practice, the materials used, as long as they are compatible with the specific use, as well as the contingent shapes and dimensions, may be any according to the requirements.

The disclosures in Italian Patent Application No. MI2012A000618 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for controlling the electric power supply (1) of at least one electrical user device, **characterized in that** it comprises a board (2) which comprises a server unit (3) adapted to be connected (10) to a central unit (5) and at least one switch means (4) which is connected to a power supply (7) of said at least one electrical user device, said server unit (3) being adapted to control said at least one switch means (4).

2. The device for controlling an electric power supply (1) according to claim 1, **characterized in that** said server unit (3) is a Web server.

3. The device for controlling an electric power supply (1) according to claim 1 or 2, **characterized in that** said communication (10) between said server unit (3) and said central unit (5) occurs via an Ethernet network.

4. The device for controlling an electric power supply (1) according to claim 1 or 2, **characterized in that** said communication (10) between said server unit (3) and said central unit (5) occurs over the electric power supply network, according to technology of the powerline type.

5. The device for controlling an electric power supply (1) according to one or more of the preceding claims, **characterized in that** said board (2) comprises at least one digital or analog input (6) connected to said server unit (3).

6. The device for controlling an electric power supply (1) according to one or more of the preceding claims, **characterized in that** said power supply (7) is an electric power outlet (7a).

7. The device for controlling an electric power supply (1) according to one or more of claims 1 to 5, **characterized in that** said power supply (7) is a lamp holder (7b).

8. The device for controlling an electric power supply (1) according to one or more of claims 1 to 5, **characterized in that** said power supply (7) is an electrical connection (7c) of a junction box (8).

9. The device for controlling an electric power supply (1) according to claim 6, **characterized in that** it comprises a plurality of said electrical outlets (7a).

10. The device for controlling an electric power supply (1) according to one or more of the preceding claims, **characterized in that** said at least one switch means (4) is a relay.
